(19) Europäisches Patentamt / European Patent Office / Office européen des brevets

(11) **EP 4 262 134 B1**

(12) **EUROPEAN PATENT SPECIFICATION**

(45) Date of publication and mention
of the grant of the patent:
**30.10.2024  Bulletin 2024/44**

(21) Application number: **23167642.0**

(22) Date of filing: **12.04.2023**

(51) International Patent Classification (IPC):
**H04L 9/00** *(2022.01)*

(52) Cooperative Patent Classification (CPC):
**H04L 9/008;** H04L 2209/46

(54) **SECURE MULTI-PARTY COMPUTATION METHODS AND APPARATUSES**

SICHERE MEHRPARTEIENBERECHNUNGSVERFAHREN UND -VORRICHTUNGEN

PROCÉDÉS ET APPAREILS DE CALCUL SÉCURISÉ MULTI-PARTIE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **12.04.2022  CN 202210380969**

(43) Date of publication of application:
**18.10.2023  Bulletin 2023/42**

(73) Proprietor: **Alipay (Hangzhou) Information Technology Co., Ltd.**
**Hangzhou, Zhejiang 310000 (CN)**

(72) Inventors:
 • **LU, Yufei**
  **Hangzhou, Zhejiang 310000 (CN)**
 • **WANG, Lei**
  **Hangzhou, Zhejiang 310000 (CN)**
 • **ZHANG, Lei**
  **Hangzhou, Zhejiang 310000 (CN)**
 • **CUI, Jinming**
  **Hangzhou, Zhejiang 310000 (CN)**

(74) Representative: **Fish & Richardson P.C.**
**Highlight Business Towers**
**Mies-van-der-Rohe-Straße 8**
**80807 München (DE)**

(56) References cited:
**US-A1- 2012 288 086**

 • **JULIAN TRAN ET AL: "Implementing Homomorphic Encryption Based Secure Feedback Control for Physical Systems", ARXIV.ORG, CORNELL UNIVERSITY LIBRARY, 201 OLIN LIBRARY CORNELL UNIVERSITY ITHACA, NY 14853, 19 February 2019 (2019-02-19), XP081121353**

EP 4 262 134 B1

## Description

### TECHNICAL FIELD

One or more embodiments of this specification relate to joint data processing, and in particular, to privacy-protection-based secure multi-party computation methods and apparatuses.

### BACKGROUND

With the development of computer technologies, j oint data processing has been applied to various technical fields for analyzing and processing various types of service data. Typically, for example, data needed for federated machine learning often involves a plurality of fields. For example, in a machine-learning-based merchant classification analysis scenario, an electronic payment platform has transaction record data of merchants, an electronic commerce platform stores sales data of the merchants, and a bank institution has loan data of the merchants. Data often exists in the form of islands. Due to problems such as data security and user privacy, data integration faces great resistance, and it is difficult to integrate data scattered on various platforms to train a machine learning model. Therefore, it is proposed that a plurality of parties jointly perform data processing and model training on the premise of protecting privacy, so that data is available but invisible.

To implement privacy protection of data in a joint data processing process, a plurality of secure multi-party computation (MPC) methods are proposed, among which homomorphic encryption is widely applied.

J. Tran et al: "Implementing Homomorphic Encryption Based Secure Feedback Control" discloses an implementation of Paillier homomorphic encryption with modular multipliers and exponentiators implemented using Montgomery multiplication.

United States Patent Application publication document US 2012/288086 A1 discloses background information on homomorphic mappings for use with Montgomery multiplication.

However, computation performance of homomorphic encryption needs to be further improved due to computation complexity of homomorphic encryption.

Therefore, it is desirable to have an improved solution to improve computation performance of a homomorphic encryption computation process, so that the homomorphic encryption computation process is better applied to privacy-protection-based multi-party joint data processing.

### SUMMARY

The invention is defined by the appended claims. One or more embodiments of this specification describe secure multi-party computation methods and apparatuses, to improve computation performance by using Montgomery reduction in a ciphertext computation stage of homomorphic encryption.

According to a first aspect, a secure multi-party computation method is provided. The method includes the following: a first party performs a first mapping operation and homomorphic encryption on first plaintext data to obtain a first converted ciphertext in a Montgomery state, where the first mapping operation is used to convert data from an integer ring to the Montgomery state; the first party sends the first converted ciphertext to a second party; and the second party performs a first homomorphic operation in the Montgomery state based on the first converted ciphertext to obtain a first result ciphertext in the Montgomery state, where the first homomorphic operation includes a modular multiplication operation.

According to one or more implementations, the method further includes the following: the second party sends the first result ciphertext to the first party; and the first party performs Montgomery reduction and a decryption operation on the first result ciphertext to obtain a first result plaintext.

According to one or more other implementations, the method further includes the following: the second party sends the first result ciphertext to a third party; and the third party performs a second homomorphic operation in the Montgomery state based on the first result ciphertext to obtain a second result ciphertext.

In one or more embodiments, that the first party performs a first mapping operation and homomorphic encryption on first data to obtain a first converted ciphertext in a Montgomery state specifically includes the following: the first party performs homomorphic encryption on the first plaintext data to obtain a first original ciphertext; and converts the first ciphertext to the Montgomery state by using the first mapping operation, to obtain the first converted ciphertext.

In one or more other embodiments, that the first party performs a first mapping operation and homomorphic encryption on first data to obtain a first converted ciphertext in a Montgomery state specifically includes the following: the first party converts the first plaintext data to the Montgomery state by using the first mapping operation, to obtain a first converted plaintext; and performs an encryption operation on the first converted plaintext in the Montgomery state to obtain the first converted ciphertext.

According to one or more implementations, the method further includes the following: the second party obtains a second converted ciphertext in the Montgomery state; and the obtaining a first result ciphertext in the Montgomery state specifically includes performing the first homomorphic operation on the first converted ciphertext and the second converted ciphertext to obtain the first result ciphertext.

In one or more embodiments of the previous implementations, the second party receives the second converted ciphertext from the first party.

In one or more other embodiments of the previous implementations, the second party performs the first mapping operation and homomorphic encryption on local second plaintext data of the second party to obtain the second converted ciphertext.

According to one or more implementations, the first plaintext data is parameter data of a service prediction model, and the second plaintext data is characteristic data of a service object.

According to a second aspect, a secure multi-party computation method is provided. The method is executed by a first party and includes the following: a first mapping operation and homomorphic encryption are performed on first plaintext data to obtain a first converted ciphertext in a Montgomery state, where the first mapping operation is used to convert data from an integer ring to the Montgomery state; the first converted ciphertext is sent to a second party; a result ciphertext is received from a third party, where the result ciphertext is obtained by performing a homomorphic operation in the Montgomery state based on the first converted ciphertext, and the homomorphic operation includes a modular multiplication operation; and

Montgomery reduction and a decryption operation are performed on the result ciphertext to obtain a result plaintext.

According to a third aspect, a secure multi-party computation method is provided. The method is executed by a second party and includes the following: a first converted ciphertext in a Montgomery state is received from a first party, where the first converted ciphertext is obtained by the first party by performing a first mapping operation and homomorphic encryption on first plaintext data, and the first mapping operation is used to convert data from an integer ring to the Montgomery state; a first homomorphic operation is performed in the Montgomery state based on the first converted ciphertext to obtain a first result ciphertext in the Montgomery state, where the first homomorphic operation includes a modular multiplication operation; and the first result ciphertext is sent.

According to a fourth aspect, a secure multi-party computation system is provided. The system includes a first party and a second party.

The first party is configured to perform a first mapping operation and homomorphic encryption on first plaintext data to obtain a first converted ciphertext in a Montgomery state, where the first mapping operation is used to convert data from an integer ring to the Montgomery state.

The first party is further configured to send the first converted ciphertext to a second party.

The second party is configured to perform a first homomorphic operation in the Montgomery state based on the first converted ciphertext to obtain a first result ciphertext in the Montgomery state, where the first homomorphic operation includes a modular multiplication operation.

According to a fifth aspect, a secure multi-party computation apparatus is provided. The apparatus is deployed in a first party and includes: an encryption conversion unit, configured to perform a first mapping operation and homomorphic encryption on first plaintext data to obtain a first converted ciphertext in a Montgomery state, where the first mapping operation is used to convert data from an integer ring to the Montgomery state; a sending unit, configured to send the first converted ciphertext to a second party; a receiving unit, configured to receive a result ciphertext from a third party, where the result ciphertext is obtained by performing a homomorphic operation in the Montgomery state based on the first converted ciphertext, and the homomorphic operation includes a modular multiplication operation; and a decryption conversion unit, configured to perform Montgomery reduction and a decryption operation on the result ciphertext to obtain a result plaintext.

According to a sixth aspect, a secure multi-party computation apparatus is provided. The apparatus is deployed in a second party and includes: a receiving unit, configured to receive a first converted ciphertext in a Montgomery state from a first party, where the first converted ciphertext is obtained by the first party by performing a first mapping operation and homomorphic encryption on first plaintext data, and the first mapping operation is used to convert data from an integer ring to the Montgomery state; an operation unit, configured to perform a first homomorphic operation in the Montgomery state based on the first converted ciphertext to obtain a first result ciphertext in the Montgomery state, where the first homomorphic operation includes a modular multiplication operation; and a sending unit, configured to send the first result ciphertext.

According to a seventh aspect, a computer-readable storage medium is provided. The computer-readable storage medium stores a computer program. When the computer program is executed in a computer, the computer is enabled to perform the method according to any one of the previous first to third aspects.

According to an eighth aspect, a computation device is provided. The device includes a memory and a processor. The memory stores executable code, and the processor implements the method according to any one of the previous first to third aspects when executing the executable code.

In the secure multi-party computation solutions provided in the embodiments of this specification, a ciphertext is kept in the Montgomery state, so that computation performance of a ciphertext computation stage can be improved by using Montgomery reduction.

**BRIEF DESCRIPTION OF DRAWINGS**

To describe the technical solutions in the embodiments of this application more clearly, the following briefly describes the accompanying drawings needed for describing the embodiments. Clearly, the accompanying drawings in the following descriptions show merely some embodiments of this application, and a person of ordinary skill in the art can still derive other accompanying drawings from these accompanying drawings without creative efforts.

FIG. 1 is a schematic diagram illustrating performing a modular multiplication operation by using Montgomery reduction;

FIG. 2 is a schematic diagram illustrating performing a modular exponentiation operation by using Montgomery reduction;

FIG. 3 is a schematic diagram illustrating a computation process of secure multi-party computation, according to one or more embodiments;

FIG. 4 is a schematic diagram illustrating a computation process of secure multi-party computation, according to one or more embodiments;

FIG. 5 illustrates a correspondence among plaintext space, ciphertext space, and Montgomery space;

FIG. 6 is a schematic diagram illustrating a structure of a secure multi-party computation apparatus deployed in a first party, according to one or more embodiments; and

FIG. 7 is a schematic diagram illustrating a structure of a secure multi-party computation apparatus deployed in a second party, according to one or more embodiments.

**DESCRIPTION OF EMBODIMENTS**

The solutions provided in this specification are described below with reference to the accompanying drawings.

As previously described, homomorphic encryption is a cryptographic technology that can protect data privacy and can also implement data computation when a plurality of parties jointly perform a data operation. Homomorphic encryption allows that a computation party performs an operation on a ciphertext and obtains a result that is still encrypted, where a result obtained by decrypting the result is the same as a result obtained by performing the same operation on a plaintext.

Specifically, the homomorphic encryption algorithm is such an encryption function that a result of performing an operation on a plaintext and then performing encryption is equivalent to a result of performing encryption and then performing a corresponding operation on a ciphertext. For example, $v_1$ and $v_2$ are encrypted by using the same public key PK, to obtain $E_{PK}(v_1)$ and $E_{PK}(v_2)$. If the following equation is satisfied:

$$E_{PK}(v_1 + v_2) = E_{PK}(v_1) \oplus E_{PK}(v_2) \ (1)$$

it can be considered that the encryption algorithm satisfies addition homomorphism, where $\oplus$ is a corresponding homomorphic addition operation.

For example, the Paillier algorithm is a common encryption algorithm that satisfies addition homomorphism. Specifically, the Paillier algorithm uses an asymmetric encryption manner in which a public key is used for encryption and a private key is used for decryption. The public key can be represented as (N, g), where N is a natural number and can be represented as a product of two larger prime numbers p and q: N = p*q, and g is a natural number less than $N^2$ and satisfying a specific mathematical condition. In practice, g = N+1 can be taken. According to the Paillier encryption algorithm, when a message m is encrypted by using a public key PK, a ciphertext c can be expressed as follows:

$$c = g^m * r^N = (N + 1)^m * r^N \ (\text{mod } N^2) \ (2),$$

where
r is a random number used for encryption, and mod is a modulo operation.

Based on the ciphertext form shown in equation (2), it is easy to verify that the Paillier algorithm satisfies the following equation:

$$E_{PK}(v_1 + v_2) = E_{PK}(v_1) \cdot E_{PK}(v_2) \ (3)$$

In this case, ciphertext multiplication $E_{PK}(v_1) \cdot E_{PK}(v_2)$ corresponds to a homomorphic addition operation.

On the basis of the Paillier algorithm, a plurality of improved algorithms are also proposed, such as the OU (Okamoto-Uchiyama) algorithm and the DJ (Damgård-Jurik) algorithm. Similar to the encryption and operation rules of Paillier, in encryption and operation rules of the improved algorithms, power operations and modulo operations are involved in encryption processes, and ciphertext multiplication is involved in ciphertext operation stages.

Computation can be performed on a ciphertext in the homomorphic encryption algorithm, and it is a very ideal feature for data processing of privacy protection. Therefore, the homomorphic encryption algorithm can be applied to a joint computation scenario as a common secure multi-party computation means. However, a homomorphic encryption computation process is several orders of magnitude slower than plaintext computation in computation performance. It is a constraint for further popularization and application of the homomorphic encryption algorithm.

It can be seen from the analysis that, regardless of Paillier, OU, or another homomorphic encryption algorithm, a computation process of the homomorphic encryption algorithm is performed in modulo space, and a large quantity of modulo operations are involved. It is a main factor of low performance of the homomorphic encryption operation. It can be seen by a person skilled in the art that the modulo operation involves division, and division is relatively slow in computation on a CPU. Specifically, a computation process of a mod m is shown in the following equation (4):

$$a \ mod \ m = a - \left\lfloor \frac{a}{m} \right\rfloor \cdot m \ (4),$$

where
$\lfloor \ \rfloor$ represents rounding down. It can be seen from equation (4) that, computation of a mod m involves one time of division, one time of multiplication, and one time of subtraction. Multiplication and subtraction are relatively fast in computation on the CPU, and division needs to consume a large amount of time.

To avoid a division operation in a modulo process to accelerate modulo computation, Montgomery reduction, also referred to as the Montgomery statute, is proposed. Montgomery reduction aims to calculate a value of a mod m without division.

Specifically, Montgomery reduction can be described as follows: m is set to an integer and represents modulo space; and R is an integer related to m and taken based on a base of a numbering system, R>m, and m is mutually prime with R. In this case, for a given integer T, a Montgomery reduction computation result of the integer is $TR^{-1} \ mod \ m$. When appropriate R is selected, a value of $TR^{-1} \ mod$ m can be fast calculated by using Montgomery reduction. In the computation process, traditional division is replaced with a simple shift operation to implement a fast modulo operation.

Montgomery reduction cannot be directly applied, and numbers need to satisfy a specific form when Montgomery reduction is used. For example, to calculate a mod m, R (a value related to m as previously described) is first calculated based on m, and then $TR^{-1}$ mod m can be fast calculated if a satisfies the form of $TR^{-1}$. Therefore, an important step in using Montgomery reduction is constructing the form of $TR^{-1}$. An actual example is used below to describe how to use Montgomery reduction to accelerate a modulo-related operation.

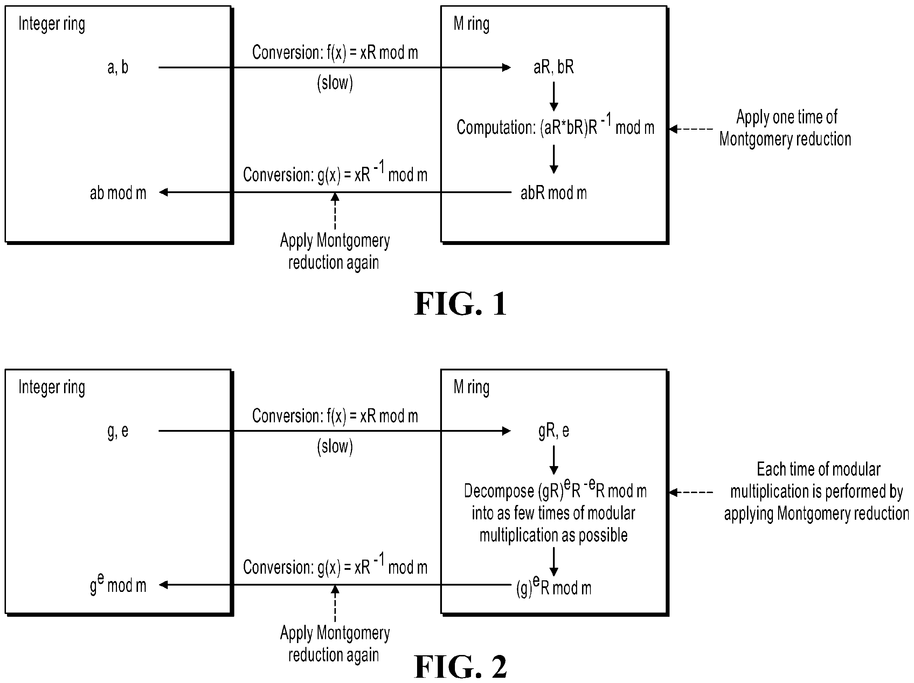

FIG. 1 is a schematic diagram illustrating performing a modular multiplication operation by using Montgomery reduction. In the example in FIG. 1, assume that a and b are integers in integer ring Z and m is a positive integer, in the example, a*b mod m attempts to be calculated, i.e. modular multiplication of a and b attempts to be performed.

As shown in FIG. 1, the modular multiplication operation is performed by applying Montgomery reduction, and an operation process mainly includes the following steps.

First, a mapping function f(x) is used to respectively convert a and b from the integer ring (hereinafter referred to as a Z ring) to a Montgomery ring (hereinafter referred to as an M ring), to obtain results aR and bR in a Montgomery state. As shown in FIG. 1, here, the mapping function f(x) = xR mod m is used to map an input integer x to the Montgomery ring, where xR is denoted as a mapping result of x in the Montgomery state.

Then, T = aR*bR (one time of regular multiplication) is calculated in the Montgomery state, and then one time of Montgomery reduction is applied to obtain aR*bR*$TR^{-1}$ mod m = abR mod m. The result is a result in the M ring or the Montgomery state.

Finally, the result abR mod m in the M ring is mapped back to the Z ring by applying Montgomery reduction again to obtain ab mod m, i.e. a desired target computation result.

FIG. 2 is a schematic diagram illustrating performing a modular exponentiation operation by using Montgomery reduction. In the example in FIG. 2, assume that g is an integer in integer ring Z and e and m are positive integers, in the example, g^e mod m attempts to be calculated, i.e. modular exponentiation of g attempts to be performed.

As shown in FIG. 2, the modular exponentiation operation is performed by applying Montgomery reduction, and an operation process mainly includes the following steps.

First, a mapping function f(x) is used to convert g from the integer ring to a Montgomery ring, to obtain a result gR in a Montgomery state. Then, in the Montgomery state, gR raised to the power of e is decomposed into a plurality of times of modular multiplication, each time of modular multiplication is performed by applying one time of Montgomery reduction, and a result $(g)^eR$ mod m in the M state is finally obtained. Finally, the result in the M ring is mapped back to the Z ring by applying Montgomery reduction again to obtain $g^e$ mod m, i.e. a target computation result.

It can be seen from the examples in FIG. 1 and FIG. 2 that, if a modulo operation is performed by using Montgomery reduction, first, a mapping function f(x) needs to be used to map a value x to be calculated from an integer ring Z ring to an M ring. However, computation of xR mod m in f(x) involves division, and performance is relatively low. Therefore, conversion from the Z ring to the M ring is relatively slow.

Therefore, in the example in FIG. 1, although modular multiplication computation can be completed by using Montgomery reduction, in view of time-consuming conversion from the Z ring to the M ring, performance in this case is lower than performance in the case of directly performing multiplication and modulo operations in the Z ring. In the example in FIG. 2, g^e is decomposed into many times of modular multiplication, and benefits brought by the many times of modular multiplication are enough to cancel overheads of conversion from the Z ring to the M ring. Therefore, computation can be accelerated when Montgomery reduction is used in the modular exponentiation operation.

An encryption process of the homomorphic encryption algorithm generally involves a large quantity of modular exponentiation operations. For example, references can be made to the encryption process of the Paillier algorithm shown in Equation (2). Therefore, an encryption stage of the homomorphic encryption algorithm can be accelerated by using Montgomery reduction. However, a ciphertext operation stage of the homomorphic encryption algorithm, for example, homomorphic addition shown in equation (3), generally involves a modular multiplication operation. As previously described, in the modular multiplication operation, performance obtained by using Montgomery reduction is not higher than performance obtained by directly performing computation. Therefore, in conventional technologies, a homomorphic ciphertext operation cannot be accelerated by using Montgomery reduction.

In view of this, the inventors have proposed a new solution architecture. In the architecture, an encryption party keeps an encrypted ciphertext in a Montgomery state, so that a computation party can perform a homomorphic ciphertext operation in the Montgomery state by using Montgomery reduction, including a modular multiplication operation, thereby greatly improving computation performance of a ciphertext operation stage. Implementations of the solution architecture are described in detail below.

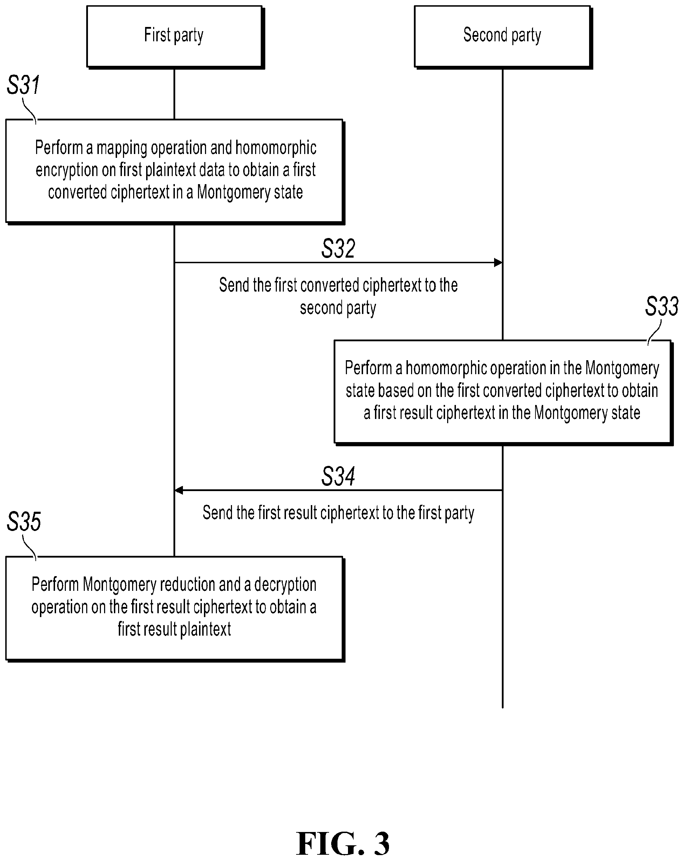

FIG. 3 is a schematic diagram illustrating a computation process of secure multi-party computation, according to one or more embodiments. In the example in FIG. 3, secure multi-party computation involves a first party and a second party. The first party acts as an encryption party/a decryption party, and the second party acts as a ciphertext computation party. The first party and the second party can be specifically implemented as any servers, apparatuses, platforms, devices, or device clusters having computation and processing capabilities, and are not limited here. In different service scenarios of different embodiments, the first party and the second party can have different service roles. In one or more embodiments, the first party can be a model owner, having a pre-trained service prediction model that needs privacy protection, and the second party can be a model user, having characteristic data of some service objects to be tested. In one or more other embodiments, the first party can be a model user, and the second party can be a model owner. In one or more still other embodiments, the first party is a private data owner, and the second party is a computation platform.

At a preliminary stage before secure multi-party computation, the first party first generates a key pair of a homomorphic encryption algorithm, i.e. a public key PK and a private key SK. The public key PK is public, and the private key SK is held by the local party. The homomorphic encryption algorithm can be a Paillier algorithm, an OU algorithm, a DJ algorithm, etc. In these homomorphic encryption algorithms, a modular exponentiation operation is used in an encryption stage, and a modular multiplication operation is involved in a ciphertext operation stage.

After the public-private key pair is prepared, the two parties can perform secure multi-party computation.

In a secure multi-party computation process, in step 31, the first party performs a mapping operation and homomorphic encryption on first plaintext data to obtain a first converted ciphertext in a Montgomery state. Specifically, the first plaintext data, denoted as pi, is private data held by the first party, and is also target data to be encrypted. The mapping operation is a mapping function used to convert data from an integer ring to the Montgomery state, for example, the previous mapping function f(x) = xR mod m. If a ciphertext obtained by performing homomorphic encryption on the first plaintext data pi is denoted as ci, the first converted ciphertext in the Montgomery state obtained in step 31 can be denoted as ciR.

To obtain the first converted ciphertext, in one or more embodiments, the first party first performs homomorphic encryption on the first plaintext data pi in a conventional method to obtain a first original ciphertext ci; and then converts the first original ciphertext ci to the Montgomery state by using the mapping operation, to obtain the first converted ciphertext ciR.

As previously described, a modular exponentiation operation can be accelerated by using Montgomery reduction in an encryption stage. Therefore, in one or more other embodiments, more advantageously, the first party can convert the first plaintext data pi to the Montgomery state by using the previous mapping operation $f(x)$, to obtain a first converted plaintext piR; and then perform an encryption operation on the first converted plaintext piR in the Montgomery state to obtain the first converted ciphertext ciR. A process of performing the encryption operation on the first converted plaintext piR in the Montgomery state involves the modular exponentiation operation in the M ring shown in FIG. 2. However, instead of converting the result in the M ring back to the integer ring in FIG. 2, in step 31, the first party directly outputs a result in an M ring, i.e. a result in the Montgomery state, as the first converted ciphertext ciR.

Next, in step 32, the first party sends the first converted ciphertext ciR to the second party.

Then, in step 33, the second party performs a homomorphic operation in the Montgomery state based on the first converted ciphertext ciR to obtain a first result ciphertext c'R in the Montgomery state. The homomorphic operation includes a modular multiplication operation, for example, a homomorphic addition operation (corresponding to ciphertext multiplication) in the Paillier algorithm or the OU algorithm.

According to one or more implementations, the homomorphic operation includes performing a homomorphic operation, for example, homomorphic addition, on the first converted ciphertext ciR and other ciphertext data. To perform the homomorphic operation in the Montgomery state, the second party needs to ensure that the other ciphertext data is also in the Montgomery state.

In view of this, in one or more embodiments, the second party obtains a second converted ciphertext $c_2R$ in the Montgomery state. In an example, the second converted ciphertext can be from the first party, i.e. the first party obtains the second converted ciphertext $c_2R$ by encrypting and converting second plaintext data $p_2$ in a similar method to the first converted ciphertext, and then sends the second converted ciphertext $c_2R$ to the second party. In another example, the second converted ciphertext can be from the second party, i.e. the second party reads local second plaintext data $p_2$ of the second party, and performs the mapping operation and homomorphic encryption on the data to obtain the second converted ciphertext $c_2R$. It is worthwhile to understand that a public key PK is used for encryption in a homomorphic encryption process, and the public key PK is public. Therefore, the second party can obtain the second converted ciphertext $c_2R$ by encrypting and mapping the second plaintext data in a similar method in which the first party obtains the first converted ciphertext.

Then, the second party performs the homomorphic operation on the first converted ciphertext ciR and the second converted ciphertext $c_2R$ in the Montgomery state. For example, when the homomorphic operation corresponds to ciphertext multiplication, the homomorphic operation of the first converted ciphertext ciR and the second converted ciphertext $c_2R$ corresponds to the modular multiplication operation in the M ring shown in FIG. 1.

Although the homomorphic operation performed by the second party is previously described in combination with the second converted ciphertext, it is worthwhile to understand that, the homomorphic operation performed by the second party can involve more data, for example, also involve a third ciphertext, and the homomorphic operation can include more complex operations, for example, a plurality of times of modular multiplication, and a combination of modular multiplication results. Implementations are not limited here.

As such, the second party performs the homomorphic operation in the Montgomery state based on the first converted ciphertext to obtain the first result ciphertext c'R in the Montgomery state. Then, in step 34, the second party sends the first result ciphertext c'R to the first party.

Then, in step 35, the first party performs Montgomery reduction and a decryption operation on the first result ciphertext c'R to obtain a first result plaintext. Specifically, the first party can first apply Montgomery reduction to the first result ciphertext c'R to obtain a ciphertext c' in an ordinary form (in the integer ring); and then decrypt the ciphertext c' by using a private key SK held by the first party to obtain the first result plaintext.

It can be understood that the previous secure multi-party computation can be applied to a plurality of different service scenarios. In different service scenarios, data transmitted between the first party and the second party can have different service meanings. For example, when the first party is a model owner, and the second party is a model user, the first plaintext data can be model parameters of a service prediction model owned by the first party, and the first party encrypts the first plaintext data and then sends encrypted plaintext data to the second party; and the second plaintext data can be characteristic data that is of a service object and that is owned by the second party, and the second party performs a homomorphic operation based on model parameters in an encrypted state and the characteristic data, where the obtained first result ciphertext can correspond to a prediction result or an intermediate result of the service prediction model. When the first party is a model user, and the second party is a model owner, the first plaintext data can be characteristic data that is of a service object and that is owned by the first party, and the second plaintext data can be model parameters. When the first party is a data holder, and the second party is a computation platform, the first plaintext data and the second plaintext data are both private data of the first party, for example, user personal information of different projects; the first party encrypts the first plaintext data and sends encrypted plaintext data to the second party;

and the second party performs a homomorphic operation on private data in an encrypted state based on a secret algorithm or model of the second party, to obtain the first result ciphertext, where the first result ciphertext corresponds to a processing result for the private data. In addition to the examples, secure multi-party computation in FIG. 3 can also be applied to other service scenarios. The service scenarios are not listed one by one here.

It is worthwhile to emphasize that, regardless of a specific scenario, in the previous process, it can be seen that the data is kept in the Montgomery state, i.e. in the form of xR, throughout the ciphertext operation stage, so that the homomorphic ciphertext operation can be continued in the Montgomery state, to facilitate computation acceleration performed by using Montgomery reduction. For example, modular multiplication is performed on two pieces of data aR and bR in the Montgomery state to obtain (ab)R. The data form does not change after modular multiplication. For abR, ab can be considered as x as a whole. Therefore, abR can continue to be multiplied by other xR to obtain abxR, and when a result finally needs to be obtained, R can be eliminated to obtain a real result abx. As such, computation is accelerated by using Montgomery reduction throughout the ciphertext computation stage, thereby improving computation performance.

It has been proved by experiments that, when the OU encryption algorithm is used, for a homomorphic addition operation between ciphertexts, performance can be improved by 3.75 times by performing operations in the Montgomery state according to the previous solutions compared with conventional ciphertext modular multiplication. For an operation of "ciphertext + plaintext", performance is also improved by two times in the previous solutions compared with conventional technologies. Therefore, according to the previous solutions, computation performance of the ciphertext operation stage is significantly improved.

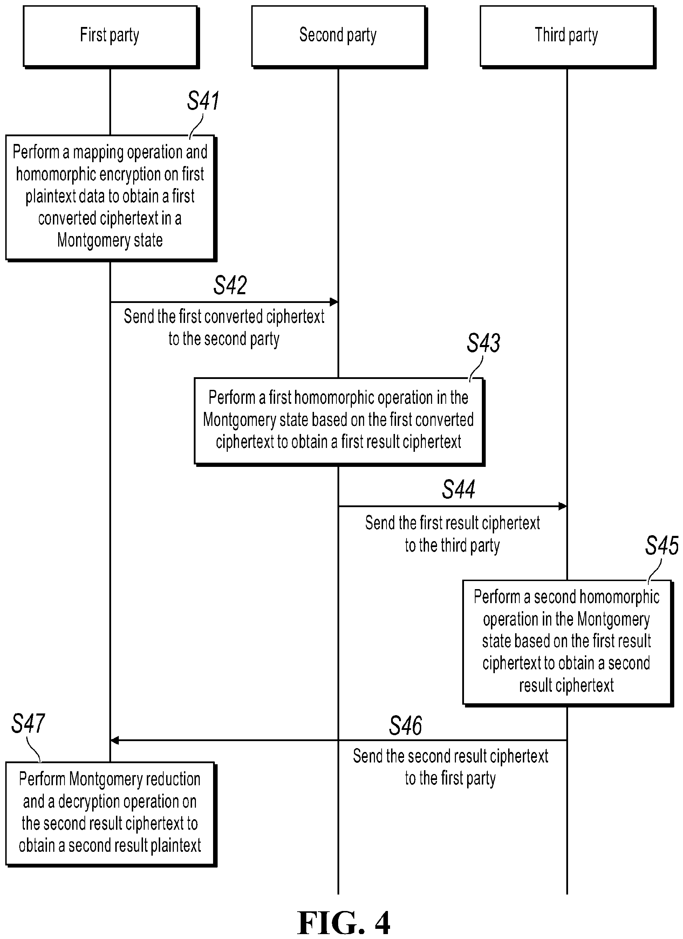

The previous solution architecture and technical concepts can also be applied to secure multi-party computation of more than two parties. FIG. 4 is a schematic diagram illustrating a computation process of secure multi-party computation, according to one or more embodiments. In the example in FIG. 4, secure multi-party computation involves a first party, a second party, and a third party. The first party acts as an encryption party/a decryption party, and the second party and the third party act as ciphertext computation parties. The parties can be specifically implemented as any servers, apparatuses, platforms, devices, or device clusters having computation and processing capabilities, and are not limited here. In one or more embodiments, the first party can be a model owner, having a pre-trained service prediction model that needs privacy protection, and the second party and the third party are both model users, each having a part of characteristic data (private data) of a service object to be tested. In one or more other embodiments, the first party is a data owner, and the second party and the third party each have a model part deployed in a distributed method. In other embodiments, the architecture can also be applied to other service scenarios.

In a secure multi-party computation process, in step 41, the first party performs a mapping operation and homomorphic encryption on first plaintext data to obtain a first converted ciphertext $c_1R$ in a Montgomery state.

Next, in step 42, the first party sends the first converted ciphertext ciR to the second party.

Then, in step 43, the second party performs a first homomorphic operation in the Montgomery state based on the first converted ciphertext ciR to obtain a first result ciphertext c'R in the Montgomery state.

Specific execution processes of the previous steps 41 to 43 are similar to the processes in FIG. 3 and details are omitted for simplicity.

Then, in step 44, the second party sends the first result ciphertext c'R to the third party.

In step 45, the third party performs a second homomorphic operation in the Montgomery state based on the first result ciphertext c'R to obtain a second result ciphertext. Specifically, the second homomorphic operation can include performing a homomorphic operation on the first result ciphertext and other converted ciphertext data, referred to as a third converted ciphertext. In an example, the third converted ciphertext is obtained by the third party by performing mapping conversion and encryption on third plaintext data locally owned by the third party. In another example, the third converted ciphertext is provided by the first party for the third party. In still another example, the third converted ciphertext is an intermediate result ciphertext obtained by performing a homomorphic operation based on a converted ciphertext provided by the first party and a local converted ciphertext of the third party. In addition, an operation method of the second homomorphic operation can be the same as or different from the operation method of the first homomorphic operation performed by the second party, and implementations are not limited here.

Then, in step 46, the third party sends the second result ciphertext to the first party.

Then, in step 47, the first party performs Montgomery reduction and a decryption operation on the second result ciphertext to obtain a second result plaintext.

The process of performing multi-party secure computation by using Montgomery reduction is previously described with reference to a scenario of two computation parties (the second party and the third party). It can be understood that the computation process can be extended to a scenario of more computation parties. For example, a fourth party is further included, and the third party sends the result ciphertext of the third party to the fourth party, so that the fourth party continues to perform a homomorphic operation on the basis of the result ciphertext. That is, after obtaining a result ciphertext, each computation party sends the result ciphertext to a subsequent computation party, so that the subsequent computation party continues an operation. Finally, a certain computation party sends a final result ciphertext to the first party, so that the first party decrypts the final result ciphertext to obtain a result plaintext.

It is worthwhile to note that in the previous computation process of a plurality of computation parties, the data is still kept in the Montgomery state throughout the ciphertext operation stage, regardless of a quantity of computation parties that the data passes through, so that the homomorphic ciphertext operation can be continued in the Montgomery state. Therefore. computation can be accelerated by using Montgomery reduction, thereby improving operation performance.

Security of the ciphertext in the Montgomery state is demonstrated below.

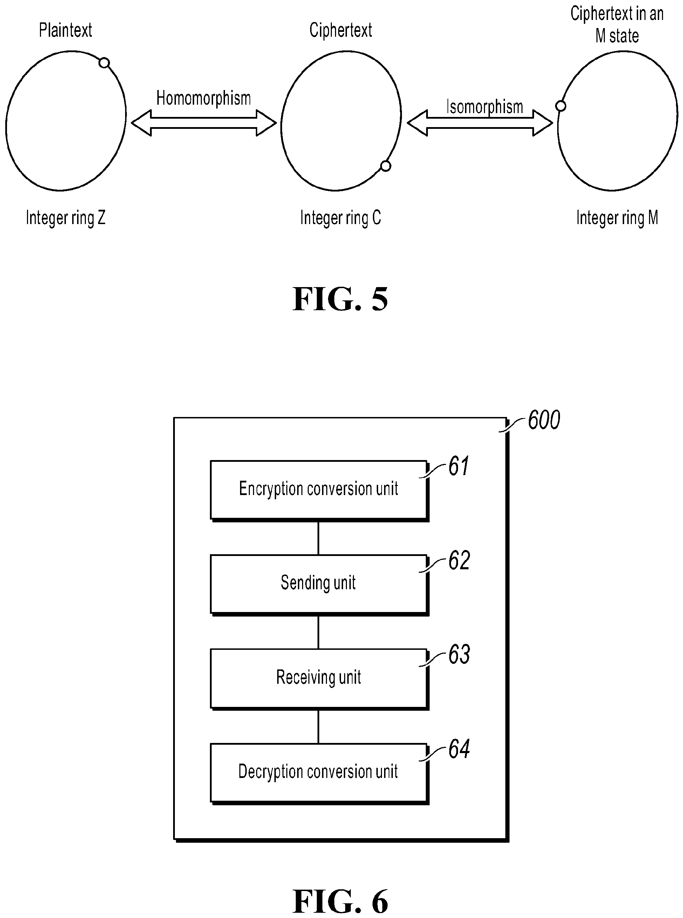

FIG. 5 illustrates a correspondence among plaintext space, ciphertext space, and Montgomery space. As shown in the figure, the plaintext space corresponds to an integer ring Z, the ciphertext space corresponds to another integer ring C, and the Montgomery space corresponds to an integer ring M. Homomorphism indicates one-to-many mapping from plaintexts to ciphertexts, and isomorphism indicates one-to-one mapping from ciphertexts to Montgomery ciphertexts. Because the C ring and the M ring are in a one-to-one mapping relationship, security of a ciphertext in an M state is consistent with security of a native ciphertext. Assume that a ciphertext cR can be decrypted, an attacker can also convert a native ciphertext c to a plaintext p within $0(1)$ time (because conversion from c to cR can be completed within $0(1)$ time), and then decrypt a homomorphic encryption algorithm. However, it can be seen that a native homomorphic encryption algorithm is secure. Therefore, the assumption is not true, i.e. the ciphertext cR in the Montgomery state is also secure.

In conclusion, in the solution architecture proposed in the embodiments of this specification, computation performance can be improved by using Montgomery reduction in the ciphertext operation stage of secure multi-party computation, and security of the computation process can also be ensured.

In addition, corresponding to the previous secure multi-party computation process, one or more embodiments of this application further disclose a secure multi-party computation apparatus, deployed in a first party. The first party can be implemented as any computation unit, platform, server, device, etc. having computation and processing capabilities. FIG. 6 is a schematic diagram illustrating a structure of a secure multi-party computation apparatus deployed in a first party, according to one or more embodiments. As shown in FIG. 6, the apparatus 600 includes:

> an encryption conversion unit 61, configured to perform a first mapping operation and homomorphic encryption on first plaintext data to obtain a first converted ciphertext in a Montgomery state, where the first mapping operation is used to convert data from an integer ring to the Montgomery state;
> a sending unit 62, configured to send the first converted ciphertext to a second party;
> a receiving unit 63, configured to receive a result ciphertext from a third party, where the result ciphertext is obtained by performing a homomorphic operation in the Montgomery state based on the first converted ciphertext, and the homomorphic operation includes a modular multiplication operation; and
> a decryption conversion unit 64, configured to perform Montgomery reduction and a decryption operation on the result ciphertext to obtain a result plaintext.

According to one or more implementations, the second party and the third party are the same party. In one or more other implementations, the second party and the third party are different computation parties.

In one or more embodiments, the encryption conversion unit 61 is specifically configured to perform homomorphic encryption on the first plaintext data to obtain a first original ciphertext; and convert the first ciphertext to the Montgomery state by using the first mapping operation, to obtain the first converted ciphertext.

In one or more other embodiments, the encryption conversion unit 61 is specifically configured to convert the first plaintext data to the Montgomery state by using the first mapping operation, to obtain a first converted plaintext; and perform an encryption operation on the first converted plaintext in the Montgomery state to obtain the first converted ciphertext.

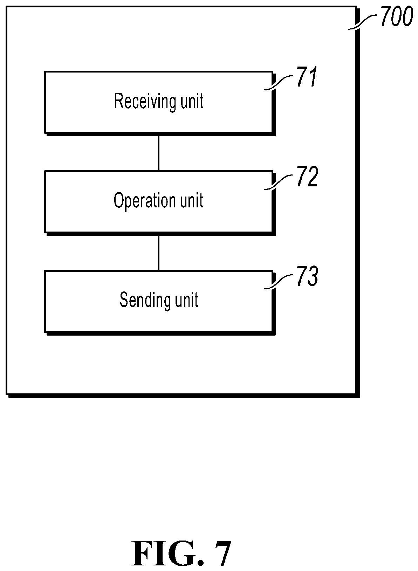

According to another aspect, one or more embodiments of this specification further disclose a secure multi-party computation apparatus, deployed in a second party. The second party can be implemented as any computation unit, platform, server, device, etc. having computation and processing capabilities. FIG. 7 is a schematic diagram illustrating a structure of a secure multi-party computation apparatus deployed in a second party, according to one or more embodiments. As shown in FIG. 7, the apparatus 700 includes:

> a receiving unit 71, configured to receive a first converted ciphertext in a Montgomery state from a first party, where the first converted ciphertext is obtained by the first party by performing a first mapping operation and homomorphic encryption on first plaintext data, and the first mapping operation is used to convert data from an integer ring to the Montgomery state;
> an operation unit 72, configured to perform a first homomorphic operation in the Montgomery state based on the first converted ciphertext to obtain a first result ciphertext in the Montgomery state, where the first homomorphic operation includes a modular multiplication operation; and

a sending unit 73, configured to send the first result ciphertext.

In one or more embodiments, the sending unit 73 is specifically configured to send the first result ciphertext to the first party, so that the first party performs Montgomery reduction and a decryption operation on the first result ciphertext to obtain a first result plaintext.

In one or more other embodiments, the sending unit 73 is specifically configured to send the first result ciphertext to a third party, so that the third party performs a second homomorphic operation in the Montgomery state based on the first result ciphertext to obtain a second result ciphertext.

According to one or more implementations, the apparatus further includes an acquisition unit (not shown), configured to obtain a second converted ciphertext in the Montgomery state. Correspondingly, the operation unit 72 is configured to perform the first homomorphic operation on the first converted ciphertext and the second converted ciphertext to obtain the first result ciphertext.

Further, in one or more embodiments, the acquisition unit is configured to receive the second converted ciphertext from the first party.

In one or more other embodiments, the acquisition unit is configured to perform the first mapping operation and homomorphic encryption on local second plaintext data to obtain the second converted ciphertext.

According to one or more implementations, the first plaintext data is parameter data of a service prediction model, and the second plaintext data is characteristic data of a service object.

According to still another aspect, one or more embodiments of this specification further disclose a secure multi-party computation system, including a first party and a second party.

The first party is configured to perform a first mapping operation and homomorphic encryption on first plaintext data to obtain a first converted ciphertext in a Montgomery state, where the first mapping operation is used to convert data from an integer ring to the Montgomery state.

The first party is further configured to send the first converted ciphertext to a second party.

The second party is configured to perform a first homomorphic operation in the Montgomery state based on the first converted ciphertext to obtain a first result ciphertext in the Montgomery state, where the first homomorphic operation includes a modular multiplication operation.

According to the previous apparatuses and systems, in a homomorphic ciphertext computation stage of secure multi-party computation, a computation party can accelerate computation by using Montgomery reduction, thereby improving computation performance.

According to one or more embodiments of another aspect, a computer-readable storage medium is further provided. The computer-readable storage medium stores a computer program. When the computer program is executed in a computer, the computer is enabled to perform the methods executed by the parties in the previous secure multi-party computation processes.

According to one or more embodiments of still another aspect, a computation device is further provided. The device includes a memory and a processor. The memory stores executable code, and the processor implements the methods executed by the parties in the previous secure multi-party computation processes when executing the executable code.

A person skilled in the art should be aware that, in one or more of the previous examples, the functions described in this application can be implemented by using hardware, software, firmware, or any combination thereof. When these functions are implemented by using software, these functions can be stored in a computer-readable medium or transmitted as one or more instructions or code in the computer-readable medium.

The objectives, technical solutions, and beneficial effects of this application are further described in detail in the previous specific implementations. It is worthwhile to understand that the previous descriptions are merely specific implementations of this application, and are not intended to limit the protection scope of this application.

**Claims**

1.  A secure multi-party computation method, comprising:

    performing (S31, S41), by a first party, a first mapping operation and homomorphic encryption on first plaintext data to obtain a first converted ciphertext in a Montgomery state, wherein the first mapping operation is used to convert data from an integer ring to the Montgomery state;
    sending (S32, S42), by the first party, the first converted ciphertext to a second party; and
    performing (S33, S43), by the second party, a first homomorphic operation in the Montgomery state based on the first converted ciphertext to obtain a first result ciphertext in the Montgomery state, wherein the first homomorphic operation comprises a modular multiplication operation.

2. The method according to claim 1, further comprising:

   sending (S34), by the second party, the first result ciphertext to the first party; and
   performing (S35), by the first party, Montgomery reduction and a decryption operation on the first result ciphertext to obtain a first result plaintext.

3. The method according to claim 1, further comprising:

   sending (S44), by the second party, the first result ciphertext to a third party; and
   performing (S45), by the third party, a second homomorphic operation in the Montgomery state based on the first result ciphertext to obtain a second result ciphertext.

4. The method according to claim 1, wherein the performing (S31, S41), by a first party, a first mapping operation and homomorphic encryption on first data to obtain a first converted ciphertext in a Montgomery state specifically comprises:

   performing, by the first party, homomorphic encryption on the first plaintext data to obtain a first original ciphertext, and converting the first ciphertext to the Montgomery state by using the first mapping operation, to obtain the first converted ciphertext; or
   converting, by the first party, the first plaintext data to the Montgomery state by using the first mapping operation, to obtain a first converted plaintext, and performing an encryption operation on the first converted plaintext in the Montgomery state to obtain the first converted ciphertext.

5. The method according to claim 1, further comprising:

   obtaining, by the second party, a second converted ciphertext in the Montgomery state; and
   the obtaining a first result ciphertext in the Montgomery state specifically comprises:
   performing the first homomorphic operation on the first converted ciphertext and the second converted ciphertext to obtain the first result ciphertext.

6. The method according to claim 5, wherein the obtaining, by the second party, a second converted ciphertext in the Montgomery state specifically comprises:

   receiving, by the second party, the second converted ciphertext from the first party; or
   performing the first mapping operation and homomorphic encryption on local second plaintext data of the second party to obtain the second converted ciphertext, optionally wherein the first plaintext data is parameter data of a service prediction model, and the second plaintext data is characteristic data of a service object.

7. A secure multi-party computation method, wherein the method is executed by a first party and comprises:

   performing (S31, S41) a first mapping operation and homomorphic encryption on first plaintext data to obtain a first converted ciphertext in a Montgomery state, wherein the first mapping operation is used to convert data from an integer ring to the Montgomery state;
   sending (S32, S42) the first converted ciphertext to a second party;
   receiving (S34, S46) a result ciphertext from a third party, wherein the result ciphertext is obtained by performing (S33, S43) a homomorphic operation in the Montgomery state based on the first converted ciphertext, and the homomorphic operation comprises a modular multiplication operation, optionally wherein the second party and the third party are the same party; and
   performing (S35, S47) Montgomery reduction and a decryption operation on the result ciphertext to obtain a result plaintext.

8. The method according to claim 7, wherein the performing (S31, S41) a first mapping operation and homomorphic encryption on first data to obtain a first converted ciphertext in a Montgomery state specifically comprises:

   performing homomorphic encryption on the first plaintext data to obtain a first original ciphertext, and converting the first ciphertext to the Montgomery state by using the first mapping operation, to obtain the first converted ciphertext; or
   converting the first plaintext data to the Montgomery state by using the first mapping operation, to obtain a first converted plaintext; and
performing an encryption operation on the first converted plaintext in the Montgomery state to obtain the first converted ciphertext.

9. A secure multi-party computation method, wherein the method is executed by a second party and comprises:

receiving (S32, S42) a first converted ciphertext in a Montgomery state from a first party, wherein the first converted ciphertext is obtained by the first party by performing (S31, S41) a first mapping operation and homomorphic encryption on first plaintext data, and the first mapping operation is used to convert data from an integer ring to the Montgomery state;
performing (S33, S43) a first homomorphic operation in the Montgomery state based on the first converted ciphertext to obtain a first result ciphertext in the Montgomery state, wherein the first homomorphic operation comprises a modular multiplication operation; and
sending (S34, S44) the first result ciphertext.

10. The method according to claim 9, wherein the sending (S34, S44) the first result ciphertext comprises:

Sending (S34) the first result ciphertext to the first party, so that the first party performs (S35) Montgomery reduction and a decryption operation on the first result ciphertext to obtain a first result plaintext; or
sending (S44) the first result ciphertext to a third party, so that the third party performs (S45) a second homomorphic operation in the Montgomery state based on the first result ciphertext to obtain a second result ciphertext.

11. The method according to claim 9, further comprising:

obtaining a second converted ciphertext in the Montgomery state; and
the obtaining a first result ciphertext in the Montgomery state specifically comprises:
performing (S43, S45) the first homomorphic operation on the first converted ciphertext and the second converted ciphertext to obtain the first result ciphertext;
optionally wherein the obtaining a second converted ciphertext in the Montgomery state specifically comprises:

receiving the second converted ciphertext from the first party; or
performing the first mapping operation and homomorphic encryption on local second plaintext data to obtain the second converted ciphertext, preferably wherein the first plaintext data is parameter data of a service prediction model, and the second plaintext data is characteristic data of a service object.

12. A secure multi-party computation system, comprising a first party and a second party, wherein

the first party is configured to perform (S31, S41) a first mapping operation and homomorphic encryption on first plaintext data to obtain a first converted ciphertext in a Montgomery state, wherein the first mapping operation is used to convert data from an integer ring to the Montgomery state;
the first party is further configured to send (S32, S42) the first converted ciphertext to the second party; and
the second party is configured to perform (S33, S43) a first homomorphic operation in the Montgomery state based on the first converted ciphertext to obtain a first result ciphertext in the Montgomery state, wherein the first homomorphic operation comprises a modular multiplication operation.

13. A secure multi-party computation apparatus, wherein the apparatus is deployed in a first party and comprises:

an encryption conversion unit, configured to perform (S31, S41) a first mapping operation and homomorphic encryption on first plaintext data to obtain a first converted ciphertext in a Montgomery state, wherein the first mapping operation is used to convert data from an integer ring to the Montgomery state;
a sending unit, configured to send (S32, S42) the first converted ciphertext to a second party;
a receiving unit, configured to receive (S46) a result ciphertext from a third party, wherein the result ciphertext is obtained by performing a homomorphic operation in the Montgomery state based on the first converted ciphertext, and the homomorphic operation comprises a modular multiplication operation; and
a decryption conversion unit, configured to perform (S35, S47) Montgomery reduction and a decryption operation on the result ciphertext to obtain a result plaintext.

14. A secure multi-party computation apparatus, wherein the apparatus is deployed in a second party and comprises:

a receiving unit, configured to receive (S32, S42) a first converted ciphertext in a Montgomery state from a first party, wherein the first converted ciphertext is obtained by the first party by performing (S31, S41) a first mapping operation and homomorphic encryption on first plaintext data, and the first mapping operation is used to convert data from an integer ring to the Montgomery state;

an operation unit, configured to perform (S33, S43) a first homomorphic operation in the Montgomery state based on the first converted ciphertext to obtain a first result ciphertext in the Montgomery state, wherein the first homomorphic operation comprises a modular multiplication operation; and

a sending unit, configured to send (S34, S44) the first result ciphertext.

15. A computation device, comprising a memory and a processor, wherein the memory stores executable code, and the processor implements the method according to any one of claims 1 to 11 when executing the executable code.

**Patentansprüche**

1. Sicheres Mehrparteien-Berechnungsverfahren, umfassend:

Durchführen (S31, S41), durch eine erste Partei, einer ersten Abbildungsoperation und einer homomorphen Verschlüsselung an ersten Klartextdaten, um einen ersten konvertierten Ciphertext in einem Montgomery-Zustand zu erhalten, wobei die erste Abbildungsoperation verwendet wird, um Daten aus einem ganzzahligen Ring in den Montgomery-Zustand zu konvertieren;
Senden (S32, S42), durch die erste Partei, des ersten konvertierten Ciphertextes an eine zweite Partei; und
Durchführen (S33, S43), durch die zweite Partei, einer ersten homomorphen Operation in dem Montgomery-Zustand basierend auf dem ersten konvertierten Ciphertext, um einen ersten Ergebnis-Ciphertext in dem Montgomery-Zustand zu erhalten, wobei die erste homomorphe Operation eine modulare Multiplikationsoperation umfasst.

2. Verfahren gemäß Anspruch 1, ferner umfassend:

Senden (S34), durch die zweite Partei, des ersten Ergebnis-Ciphertextes an die erste Partei; und
Durchführen (S35), durch die erste Partei, einer Montgomery-Reduktion und einer Entschlüsselungsoperation an dem ersten Ergebnis-Ciphertext, um einen ersten Ergebnis-Klartext zu erhalten.

3. Verfahren gemäß Anspruch 1, ferner umfassend:

Senden (S44), durch die zweite Partei, des ersten Ergebnis-Ciphertextes an eine dritte Partei; und
Durchführen (S45), durch die dritte Partei, einer zweiten homomorphen Operation in dem Montgomery-Zustand basierend auf dem ersten Ergebnis-Ciphertext, um einen zweiten Ergebnis-Ciphertext zu erhalten.

4. Verfahren gemäß Anspruch 1, wobei das Durchführen (S31, S41), durch eine erste Partei, einer ersten Abbildungsoperation und einer homomorphen Verschlüsselung an ersten Daten, um einen ersten konvertierten Ciphertext in einem Montgomery-Zustand zu erhalten, insbesondere umfasst:

Durchführen, durch die erste Partei, einer homomorphen Verschlüsselung an den ersten Klartextdaten, um einen ersten Original-Ciphertext zu erhalten, und Konvertieren des ersten Ciphertextes in den Montgomery-Zustand durch Verwenden der ersten Abbildungsoperation, um den ersten konvertierten Ciphertext zu erhalten; oder
Konvertieren, durch die erste Partei, der ersten Klartextdaten in den Montgomery-Zustand durch Verwenden der ersten Abbildungsoperation, um einen ersten konvertierten Klartext zu erhalten, und Durchführen einer Verschlüsselungsoperation an dem ersten konvertierten Klartext in dem Montgomery-Zustand, um den ersten konvertierten Ciphertext zu erhalten.

5. Verfahren gemäß Anspruch 1, ferner umfassend:

Erhalten, durch die zweite Partei, eines zweiten konvertierten Ciphertextes in dem Montgomery-Zustand; und wobei das Erhalten eines ersten Ergebnis-Ciphertextes in dem Montgomery-Zustand insbesondere umfasst:
Durchführen der ersten homomorphen Operation an dem ersten konvertierten Ciphertext und dem zweiten konvertierten Ciphertext, um den ersten Ergebnis-Ciphertext zu erhalten.

6. Verfahren gemäß Anspruch 5, wobei das Erhalten, durch die zweite Partei, eines zweiten konvertierten Ciphertextes in dem Montgomery-Zustand insbesondere umfasst:

Empfangen, durch die zweite Partei, des zweiten konvertierten Ciphertextes von der ersten Partei; oder Durchführen der ersten Abbildungsoperation und einer homomorphen Verschlüsselung an lokalen zweiten Klartextdaten der zweiten Partei, um den zweiten konvertierten Ciphertext zu erhalten, wobei optional die ersten Klartextdaten Parameterdaten eines Dienstvorhersagemodells sind und die zweiten Klartextdaten Charakteristikdaten eines Dienstobjekts sind.

7. Sicheres Mehrparteien-Berechnungsverfahren, wobei das Verfahren von einer ersten Partei ausgeführt wird und dies umfasst:

Durchführen (S31, S41) einer ersten Abbildungsoperation und einer homomorphen Verschlüsselung an ersten Klartextdaten, um einen ersten konvertierten Ciphertext in einem Montgomery-Zustand zu erhalten, wobei die erste Abbildungsoperation verwendet wird, um Daten aus einem ganzzahligen Ring in den Montgomery-Zustand zu konvertieren;
Senden (S32, S42) des ersten konvertierten Ciphertextes an eine zweite Partei;
Empfangen (S34, S46) eines Ergebnis-Ciphertextes von einer dritten Partei, wobei der Ergebnis-Ciphertext erhalten wird, indem eine homomorphe Operation in dem Montgomery-Zustand basierend auf dem ersten konvertierten Ciphertext durchgeführt (S33, S43) wird und die homomorphe Operation eine modulare Multiplikationsoperation umfasst, wobei optional die zweite Partei und die dritte Partei dieselbe Partei sind; und
Durchführen (S35, S47) einer Montgomery-Reduktion und einer Entschlüsselungsoperation an dem Ergebnis-Ciphertext, um einen Ergebnis-Klartext zu erhalten.

8. Verfahren gemäß Anspruch 7, wobei das Durchführen (S31, S41) einer ersten Abbildungsoperation und einer homomorphen Verschlüsselung an ersten Daten, um einen ersten konvertierten Ciphertext in einem Montgomery-Zustand zu erhalten, insbesondere umfasst:

Durchführen einer homomorphen Verschlüsselung an den ersten Klartextdaten, um einen ersten Original-Ciphertext zu erhalten, und Konvertieren des ersten Ciphertextes in den Montgomery-Zustand durch Verwenden der ersten Abbildungsoperation, um den ersten konvertierten Ciphertext zu erhalten; oder
Konvertieren der ersten Klartextdaten in den Montgomery-Zustand durch Verwenden der ersten Abbildungsoperation, um einen ersten konvertierten Klartext zu erhalten; und
Durchführen einer Verschlüsselungsoperation an dem ersten konvertierten Klartext in dem Montgomery-Zustand, um den ersten konvertierten Ciphertext zu erhalten.

9. Sicheres Mehrparteien-Berechnungsverfahren, wobei das Verfahren von einer zweiten Partei ausgeführt wird und dies umfasst:

Empfangen (S32, S42) eines ersten konvertierten Ciphertextes in einem Montgomery-Zustand von einer ersten Partei, wobei der erste konvertierte Ciphertext durch die erste Partei erhalten wird, indem eine erste Abbildungsoperation und eine homomorphe Verschlüsselung an ersten Klartextdaten durchgeführt (S31, S41) wird, und die erste Abbildungsoperation verwendet wird, um Daten aus einem ganzzahligen Ring in den Montgomery-Zustand zu konvertieren;
Durchführen (S33, S43) einer ersten homomorphen Operation in dem Montgomery-Zustand basierend auf dem ersten konvertierten Ciphertext, um einen ersten Ergebnis-Ciphertext in dem Montgomery-Zustand zu erhalten, wobei die erste homomorphe Operation eine modulare Multiplikationsoperation umfasst; und
Senden (S34, S44) des ersten Ergebnis-Ciphertextes.

10. Verfahren gemäß Anspruch 9, wobei das Senden (S34, S44) des ersten Ergebnis-Ciphertextes umfasst:

Senden (S34) des ersten Ergebnis-Ciphertextes an die ersten Partei, sodass die erste Partei eine Montgomery-Reduktion und eine Entschlüsselungsoperation an dem ersten Ergebnis-Ciphertext durchführt (S35), um einen ersten Ergebnis-Klartext zu erhalten; oder
Senden (S44) des ersten Ergebnis-Ciphertextes an eine dritte Partei, sodass die dritte Partei eine zweite homomorphe Operation in dem Montgomery-Zustand basierend auf dem ersten Ergebnis-Ciphertext durchführt (S45), um einen zweiten Ergebnis-Ciphertext zu erhalten.

**11.** Verfahren gemäß Anspruch 9, ferner umfassend:

Erhalten eines zweiten konvertierten Ciphertextes in dem Montgomery-Zustand; und
wobei das Erhalten eines ersten Ergebnis-Ciphertextes in dem Montgomery-Zustand insbesondere umfasst:
Durchführen (S43, S45) der ersten homomorphen Operation an dem ersten konvertierten Ciphertext und dem zweiten konvertierten Ciphertext, um den ersten Ergebnis-Ciphertext zu erhalten;
wobei optional das Erhalten eines zweiten konvertierten Ciphertextes in dem Montgomery-Zustand insbesondere umfasst:

Empfangen des zweiten konvertierten Ciphertextes von der ersten Partei; oder
Durchführen der ersten Abbildungsoperation und einer homomorphen Verschlüsselung an lokalen zweiten Klartextdaten, um den zweiten konvertierten Ciphertext zu erhalten, wobei vorzugsweise die ersten Klartextdaten Parameterdaten eines Dienstvorhersagemodells sind und die zweiten Klartextdaten Charakteristikdaten eines Dienstobjekts sind.

**12.** Sicheres Mehrparteien-Berechnungssystem, umfassend eine erste Partei und eine zweite Partei, wobei

die erste Partei dazu ausgelegt ist, eine erste Abbildungsoperation und eine homomorphe Verschlüsselung an ersten Klartextdaten durchzuführen (S31, S41), um einen ersten konvertierten Ciphertext in einem Montgomery-Zustand zu erhalten, wobei die erste Abbildungsoperation verwendet wird, um Daten aus einem ganzzahligen Ring in den Montgomery-Zustand zu konvertieren;
die erste Partei ferner dazu ausgelegt ist, den ersten konvertierten Ciphertext an die zweite Partei zu senden (S32, S42); und
die zweite Partei dazu ausgelegt ist, eine erste homomorphe Operation in dem Montgomery-Zustand basierend auf dem ersten konvertierten Ciphertext durchzuführen (S33, S43), um einen ersten Ergebnis-Ciphertext in dem Montgomery-Zustand zu erhalten, wobei die erste homomorphe Operation eine modulare Multiplikationsoperation umfasst.

**13.** Sichere Mehrparteien-Berechnungseinrichtung, wobei die Einrichtung bei einer ersten Partei eingesetzt wird und dies umfasst:

eine Verschlüsselungskonvertierungseinheit, die dazu ausgelegt ist, eine erste Abbildungsoperation und eine homomorphe Verschlüsselung an ersten Klartextdaten durchzuführen (S31, S41), um einen ersten konvertierten Ciphertext in einem Montgomery-Zustand zu erhalten, wobei die erste Abbildungsoperation verwendet wird, um Daten aus einem ganzzahligen Ring in den Montgomery-Zustand zu konvertieren;
Eine Sendeeinheit, die dazu ausgelegt ist, den ersten konvertierten Ciphertext an eine zweite Partei zu senden (S32, S42);
eine Empfangseinheit, die dazu ausgelegt ist, einen Ergebnis-Ciphertext von einer dritten Partei zu empfangen (S46), wobei der Ergebnis-Ciphertext erhalten wird, indem eine homomorphe Operation in dem Montgomery-Zustand basierend auf dem ersten konvertierten Ciphertext durchgeführt wird, und die homomorphe Operation eine modulare Multiplikationsoperation umfasst; und
eine Entschlüsselungskonvertierungseinheit, die dazu ausgelegt ist, eine Montgomery-Reduktion und eine Entschlüsselungsoperation an dem Ergebnis-Ciphertext durchzuführen (S35, S47), um einen Ergebnis-Klartext zu erhalten.

**14.** Sichere Mehrparteien-Berechnungseinrichtung, wobei die Einrichtung bei einer zweiten Partei eingesetzt wird und dies umfasst:

eine Empfangseinheit, die dazu ausgelegt ist, einen ersten konvertierten Ciphertext in einem Montgomery-Zustand von einer ersten Partei zu empfangen (S32, S42), wobei der erste konvertierte Ciphertext durch die erste Partei erhalten wird, indem eine erste Abbildungsoperation und eine homomorphe Verschlüsselung an ersten Klartextdaten durchgeführt (S31, S41) wird, und die erste Abbildungsoperation verwendet wird, um Daten aus einem ganzzahligen Ring in den Montgomery-Zustand zu konvertieren;
eine Operationseinheit, die dazu ausgelegt ist, eine erste homomorphe Operation in dem Montgomery-Zustand basierend auf dem ersten konvertierten Ciphertext durchzuführen (S33, S43), um einen ersten Ergebnis-Ciphertext in dem Montgomery-Zustand zu erhalten, wobei die erste homomorphe Operation eine modulare Multiplikationsoperation umfasst; und
eine Sendeeinheit, die dazu ausgelegt ist, den ersten Ergebnis-Ciphertext zu senden (S34, S44).

**15.** Rechenvorrichtung, umfassend einen Speicher und einen Prozessor, wobei der Speicher ausführbaren Code speichert und der Prozessor das Verfahren gemäß einem der Ansprüche 1 bis 11 implementiert, wenn der ausführbare Code ausgeführt wird.

**Revendications**

**1.** Procédé de calcul sécurisé multi-parties, comprenant :

la réalisation (S31, S41), par une première partie, d'une première opération de mise en correspondance et d'un chiffrement homomorphique sur des premières données de texte en clair pour obtenir un premier texte chiffré converti dans un état de Montgomery, dans lequel la première opération de mise en correspondance est utilisée pour convertir des données d'un anneau entier à l'état de Montgomery ;
l'envoi (S32, S42), par la première partie, du premier texte chiffré converti à une deuxième partie ; et
la réalisation (S33, S43), par la deuxième partie, d'une première opération homomorphique dans l'état de Montgomery sur la base du premier texte chiffré converti pour obtenir un premier texte chiffré résultant dans l'état de Montgomery, dans lequel la première opération homomorphique comprend une opération de multiplication modulaire.

**2.** Procédé selon la revendication 1, comprenant en outre :

l'envoi (S34), par la deuxième partie, du premier texte chiffré converti à la première partie ; et
la réalisation (S35), par la première partie, d'une réduction de Montgomery et d'une opération de déchiffrement sur le premier texte chiffré résultant pour obtenir un premier texte en clair résultant.

**3.** Procédé selon la revendication 1, comprenant en outre :

l'envoi (S44), par la deuxième partie, du premier texte chiffré résultant à une troisième partie ; et
la réalisation (S45), par la troisième partie, d'une deuxième opération homomorphique dans l'état de Montgomery sur la base du premier texte chiffré résultant pour obtenir un deuxième texte chiffré résultant.

**4.** Procédé selon la revendication 1, dans lequel la réalisation (S31, S41), par une première partie, d'une première opération de mise en correspondance et d'un chiffrement homomorphique sur des premières données pour obtenir un premier texte chiffré converti dans un état de Montgomery comprend plus précisément :

la réalisation, par la première partie, d'un chiffrement homomorphique sur les premières données de texte en clair pour obtenir un premier texte chiffré original, et la conversion du premier texte chiffré à l'état de Montgomery en utilisant la première opération de mise en correspondance, pour obtenir le premier texte chiffré converti ; ou
la conversion, par la première partie, des premières données de texte en clair à l'état de Montgomery en utilisant la première opération de mise en correspondance, pour obtenir un premier texte en clair converti, et la réalisation d'une opération de chiffrement sur le texte en clair converti dans l'état de Montgomery pour obtenir le premier texte chiffré converti.

**5.** Procédé selon la revendication 1, comprenant en outre :

l'obtention, par la deuxième partie, d'un deuxième texte chiffré converti dans l'état de Montgomery ; et
l'obtention d'un premier texte chiffré résultant dans l'état de Montgomery comprend plus précisément :
la réalisation de la première opération homomorphique sur le premier texte chiffré converti et le deuxième texte chiffré converti pour obtenir le premier texte chiffré résultant.

**6.** Procédé selon la revendication 5, dans lequel l'obtention, par la deuxième partie, d'un deuxième texte chiffré converti dans l'état de Montgomery comprend plus précisément :

la réception, par la deuxième partie, du deuxième texte chiffré converti en provenance de la première partie ; ou
la réalisation de la première opération de mise en correspondance et du chiffrement homomorphique sur des deuxièmes données de texte en clair locales de la deuxième partie pour obtenir le deuxième texte chiffré converti, et facultativement, dans lequel les premières données de texte en clair sont des données de paramètres d'un modèle de prédiction de service, et les deuxièmes données de texte en clair sont des données caractéristiques d'un objet de service.

7. Procédé de calcul sécurisé multi-parties, dans lequel le procédé est exécuté par une première partie et comprend :

la réalisation (S31, S41) d'une première opération de mise en correspondance et d'un chiffrement homomorphique sur des premières données de texte en clair pour obtenir un premier texte chiffré converti dans un état de Montgomery, dans lequel la première opération de mise en correspondance est utilisée pour convertir des données d'un anneau entier à l'état de Montgomery ;
l'envoi (S32, S42) du premier texte chiffré converti à une deuxième partie ;
la réception (S34, S46) d'un texte chiffré résultant en provenance d'une troisième partie, le texte chiffré résultant étant obtenu par réalisation (S33, S43) d'une opération homomorphique dans l'état de Montgomery sur la base du premier texte chiffré converti, et l'opération homomorphique comprenant une opération de multiplication modulaire, et facultativement, dans lequel la deuxième partie et la troisième partie sont une même partie ; et
la réalisation (S35, S47) d'une réduction de Montgomery et d'une opération de déchiffrement sur le premier texte chiffré résultant pour obtenir un texte en clair résultant.

8. Procédé selon la revendication 7, dans lequel la réalisation (S31, S41) d'une première opération de mise en correspondance et d'un chiffrement homomorphique sur des premières données pour obtenir un premier texte chiffré converti dans un état de Montgomery comprend plus précisément :

la réalisation d'un chiffrement homomorphique sur les premières données de texte en clair pour obtenir un premier texte chiffré original, et la conversion du premier texte chiffré à l'état de Montgomery en utilisant la première opération de mise en correspondance, pour obtenir le premier texte chiffré converti ; ou
la conversion des premières données de texte en clair à l'état de Montgomery en utilisant la première opération de mise en correspondance, pour obtenir un premier texte en clair converti ; et
la réalisation d'une opération de chiffrement sur le premier texte en clair converti dans l'état de Montgomery pour obtenir le premier texte chiffré converti.

9. Procédé de calcul sécurisé multi-parties, dans lequel le procédé est exécuté par une deuxième partie et comprend :

la réception (S32, S42) d'un premier texte chiffré converti dans un état de Montgomery en provenance d'une première partie, dans lequel le premier texte chiffré converti est obtenu par la première partie par réalisation (S31, S41) d'une première opération de mise en correspondance et d'un chiffrement homomorphique sur des premières données de texte en clair, et la première opération de mise en correspondance est utilisée pour convertir des données d'un anneau entier à l'état de Montgomery ;
la réalisation (S33, S43) d'une première opération homomorphique dans l'état de Montgomery sur la base du premier texte chiffré converti pour obtenir un premier texte chiffré résultant dans l'état de Montgomery, dans lequel la première opération homomorphique comprend une opération de multiplication modulaire ; et
l'envoi (S34, S44) du premier texte chiffré résultant.

10. Procédé selon la revendication 9, dans lequel l'envoi (S34, S44) du premier texte chiffré résultant comprend :

l'envoi (S34) du premier texte chiffré résultant à la première partie, de manière à ce que la première partie réalise (S35) une réduction de Montgomery et une opération de déchiffrement sur le premier texte chiffré résultant pour obtenir un premier texte chiffré résultant ; ou
l'envoi (S44) du premier texte chiffré résultant à une troisième partie, de manière à ce que la troisième partie réalise (S45) une deuxième opération homomorphique dans l'état de Montgomery sur la base du premier texte chiffré résultant pour obtenir un deuxième texte chiffré résultant.

11. Procédé selon la revendication 9, comprenant en outre :

l'obtention d'un deuxième texte chiffré converti dans l'état de Montgomery ; et
l'obtention d'un premier texte chiffré résultant dans l'état de Montgomery comprend plus précisément :
la réalisation (S43, S45) de la première opération homomorphique sur le premier texte chiffré converti et le deuxième texte chiffré converti pour obtenir le premier texte chiffré résultant ;
facultativement, dans lequel l'obtention d'un deuxième texte chiffré résultant dans l'état de Montgomery comprend plus précisément :

la réception du deuxième texte chiffré converti en provenance de la première partie ; ou
la réalisation de la première opération de mise en correspondance et du chiffrement homomorphique sur des deuxièmes données de texte en clair locales pour obtenir le deuxième texte chiffré converti, et de préférence, dans lequel les premières données de texte en clair sont des données de paramètres d'un modèle de prédiction de service, et les deuxièmes données de texte en clair sont des données caractéristiques d'un objet de service.

**12.** Procédé de calcul sécurisé multi-parties comprenant une première partie et une deuxième partie, dans lequel

la première partie est configurée pour réaliser (S31, S41) une première opération de mise en correspondance et un chiffrement homomorphique sur des premières données de texte en clair pour obtenir un premier texte chiffré converti dans un état de Montgomery, dans lequel la première opération de mise en correspondance est utilisée pour convertir des données d'un anneau entier à l'état de Montgomery ;
la première partie est en outre configurée pour envoyer (S32, S42) le premier texte chiffré converti à la deuxième partie ; et
la deuxième partie est configurée pour réaliser (S33, S43) une première opération homomorphique dans l'état de Montgomery sur la base du premier texte chiffré converti pour obtenir un premier texte chiffré résultant dans l'état de Montgomery, dans lequel la première opération homomorphique comprend une opération de multiplication modulaire.

**13.** Procédé de calcul sécurisé multi-parties, dans lequel le procédé est déployé dans une première partie et comprend :

une unité de conversion de chiffrement, configurée pour réaliser (S31, S41) une première opération de mise en correspondance et un chiffrement homomorphique sur des premières données de texte en clair pour obtenir un premier texte chiffré converti dans un état de Montgomery, dans lequel la première opération de mise en correspondance est utilisée pour convertir des données d'un anneau entier à l'état de Montgomery ;
une unité d'envoi, configurée pour envoyer (S32, S42) le premier texte chiffré converti à une deuxième partie ;
une unité de réception, configurée pour recevoir (S46) un texte chiffré résultant en provenance d'une troisième partie, dans lequel le texte chiffré résultant est obtenu par réalisation d'une opération homomorphique dans l'état de Montgomery sur la base du premier texte chiffré converti, et l'opération homomorphique comprend une opération de multiplication modulaire ; et
une unité de conversion de déchiffrement, configurée pour réaliser (S35, S47) une réduction de Montgomery et une opération de déchiffrement sur le premier texte chiffré résultant pour obtenir un texte en clair résultant.

**14.** Procédé de calcul sécurisé multi-parties, dans lequel le procédé est déployé dans une deuxième partie et comprend :

une unité de réception, configurée pour recevoir (S32, S42) un premier texte chiffré converti dans un état de Montgomery en provenance d'une première partie, dans lequel le premier texte chiffré converti est obtenu par la première partie par réalisation (S31, S41) d'une première opération de mise en correspondance et d'un chiffrement homomorphique sur des premières données de texte en clair, et la première opération de mise en correspondance est utilisée pour convertir des données d'un anneau entier à l'état de Montgomery ;
une unité d'exécution d'opération, configurée pour réaliser (S33, S43) une première opération homomorphique dans l'état de Montgomery sur la base du premier texte chiffré converti pour obtenir un premier texte chiffré résultant dans l'état de Montgomery, dans lequel la première opération homomorphique comprend une opération de multiplication modulaire ; et
une unité d'envoi, configurée pour envoyer (S34, S44) le premier texte chiffré résultant.

**15.** Dispositif de calcul, comprenant une mémoire et un processeur, dans lequel la mémoire stocke un code exécutable, et le processeur met en œuvre le procédé selon l'une quelconque des revendications 1 à 11 lors de l'exécution du code exécutable.

Integer ring

$a, b$

Conversion: $f(x) = xR \bmod m$
(slow)

M ring

$aR, bR$

Computation: $(aR*bR)R^{-1} \bmod m$ ←----- Apply one time of Montgomery reduction

$ab \bmod m$ ← Conversion: $g(x) = xR^{-1} \bmod m$ $abR \bmod m$

Apply Montgomery
reduction again

**FIG. 1**

Integer ring

$g, e$

Conversion: $f(x) = xR \bmod m$
(slow)

M ring

$gR, e$

Decompose $(gR)^e R^{-e} R \bmod m$ ←----- Each time of modular
into as few times of modular multiplication is performed by
multiplication as possible applying Montgomery reduction

$g^e \bmod m$ ← Conversion: $g(x) = xR^{-1} \bmod m$ $(g)^e R \bmod m$

Apply Montgomery
reduction again

**FIG. 2**

| First party | | Second party |
|---|---|---|

*S31*

Perform a mapping operation and homomorphic encryption on first plaintext data to obtain a first converted ciphertext in a Montgomery state

*S32*

Send the first converted ciphertext to the second party

*S33*

Perform a homomorphic operation in the Montgomery state based on the first converted ciphertext to obtain a first result ciphertext in the Montgomery state

*S34*

Send the first result ciphertext to the first party

*S35*

Perform Montgomery reduction and a decryption operation on the first result ciphertext to obtain a first result plaintext

**FIG. 3**

**First party**

**Second party**

**Third party**

*S41*

Perform a mapping operation and homomorphic encryption on first plaintext data to obtain a first converted ciphertext in a Montgomery state

*S42*

Send the first converted ciphertext to the second party

*S43*

Perform a first homomorphic operation in the Montgomery state based on the first converted ciphertext to obtain a first result ciphertext

*S44*

Send the first result ciphertext to the third party

*S45*

Perform a second homomorphic operation in the Montgomery state based on the first result ciphertext to obtain a second result ciphertext

*S47*

*S46*

Send the second result ciphertext to the first party

Perform Montgomery reduction and a decryption operation on the second result ciphertext to obtain a second result plaintext

**FIG. 4**

Plaintext
Ciphertext
Ciphertext in an M state

Homomorphism
Isomorphism

Integer ring Z
Integer ring C
Integer ring M

## FIG. 5

600

Encryption conversion unit — 61

Sending unit — 62

Receiving unit — 63

Decryption conversion unit — 64

## FIG. 6

700

Receiving unit 71

Operation unit 72

Sending unit 73

# FIG. 7

**REFERENCES CITED IN THE DESCRIPTION**

**Patent documents cited in the description**

- US 2012288086 A1

**Non-patent literature cited in the description**

- **J. TRAN et al.** *Implementing Homomorphic Encryption Based Secure Feedback Control*